# EUROPÄISCHE PATENTSCHRIFT

(11) **EP 1 946 349 B1**
(45) Veröffentlichungstag und Bekanntmachung des Hinweises auf die Patenterteilung: **02.01.2013**
(21) Anmeldenummer: 06806371.8
(22) Anmeldetag: 19.10.2006
(51) Int. Cl.: H01H 47/00, G05B 9/02

(54) **SICHERHEITSSCHALTVORRICHTUNG ZUM FEHLERSICHEREN ABSCHALTEN EINES ELEKTRISCHEN VERBRAUCHERS**
SAFETY SWITCHING APPARATUS FOR THE FAILSAFE DISCONNECTION OF AN ELECTRICAL LOAD
DISPOSITIF DE COUPURE DE COURANT DE SÉCURITÉ POUR COUPURE À SÛRETÉ INTRINSÈQUE D'UN DISSIPATEUR ÉLECTRIQUE

(30) Priorität: 11.11.2005 DE 102005055325
(43) Veröffentlichungstag der Anmeldung: 23.07.2008
(73) Patentinhaber: Pilz GmbH & Co. KG, 73760 Ostfildern (DE)
(72) Erfinder: BAUER, Ralf, 70327 Stuttgart (DE); HORNUNG, Guenter, 70771 Leinfelden-Echterdingen (DE); NITSCHE, Thomas, 73732 Esslingen (DE)
(74) Vertreter: Duhme, Torsten
(86) Internationale Anmeldenummer: PCT/EP2006/010056
(87) Internationale Veröffentlichungsnummer: WO 2007/054187

(56) Entgegenhaltungen:
- EP-B1- 1 307 793
- DE-A1- 19 702 009
- DE-C1- 4 423 704
- US-A- 6 051 894
- US-A1- 2001 027 352

## Beschreibung

Die vorliegende Erfindung betrifft eine Sicherheitsschaltvorrichtung zum fehlersicheren Abschalten eines elektrischen Verbrauchers, insbesondere in einer automatisiert betriebenen Anlage, mit einer ersten und einer zweiten Anschlussklemme zum Anschließen eines ersten Meldeschalters, mit einer dritten und einer vierten Anschlussklemme zum Anschließen eines zweiten Meldeschalters, und mit zumindest einem ersten und einem zweiten Schaltelement, die dazu ausgebildet sind, ein redundantes Ausgangsschaltsignal zum Abschalten des Verbrauchers zu erzeugen, wobei die erste Anschlussklemme mit einem betragsmäßig hohen ersten statischen Potential belegt ist, wobei die dritte Anschlussklemme mit einem unterschiedlichen, betragsmäßig niedrigen zweiten statischen Potential belegt ist, wobei die zweite Anschlussklemme mit dem ersten Schaltelement derart gekoppelt ist, dass das erste Schaltelement über den ersten Meldeschalter mit dem ersten statischen Potential verbindbar ist, und wobei die vierte Anschlussklemme mit dem zweiten Schaltelement derart gekoppelt ist, dass das zweite Schaltelement über den zweiten Meldeschalter mit dem zweiten statischen Potential verbindbar ist, mit einer Schaltungsanordnung zum Bestimmen von zumindest einem weiteren Potential an der zweiten und/oder vierten Anschlussklemme, wobei die Schaltungsanordnung ferner dazu ausgebildet ist, das redundante Ausgangsschaltsignal in Abhängigkeit von dem weiteren Potential zu steuern.

Eine solche Sicherheitsschaltvorrichtung ist aus US 2001/0027352 A1 bekannt.

Sicherheitsschaltvorrichtungen im Sinne der vorliegenden Erfindung dienen dazu, eine gefahrbringende Maschine oder Anlage fehlersicher abzuschalten, wenn dies zum Schutz von Personen erforderlich ist. Die Sicherheitsschaltvorrichtungen überwachen typischerweise die Meldesignale von Not-Aus-Tastern, Schutztürschaltern, Lichtschranken, Lichtgittern und anderen sicherheitsgerichteten Meldegeräten, und sie sind in der Lage, in Abhängigkeit von diesen Meldesignalen einen Stromversorgungspfad zu der überwachten Maschine oder Anlage zu unterbrechen. Wie leicht einzusehen ist, ist es von großer Bedeutung, dass die Sicherheitsfunktion stets gewährleistet ist und dass Fehler im Bereich der Sicherheitsschaltvorrichtung entweder abgefangen und/oder frühzeitig erkannt werden. Typischerweise sind Sicherheitsschaltvorrichtungen daher redundant und/oder mit Selbsttestfunktionen aufgebaut. Zumindest bei hohen Sicherheitsanforderungen werden auch die Meldesignale zu der Sicherheitsschaltvorrichtung redundant ausgeführt.

Die durch die Redundanz erreichbare Fehlersicherheit geht allerdings verloren, wenn ein Querschluss in den Verbindungsleitungen zwischen den Meldegeräten und der Sicherheitsschaltvorrichtung auftritt. Eine Sicherheitsschaltvorrichtung für die höheren Sicherheitskategorien der europäischen Norm EN 954-1 (oder für vergleichbare Anforderungen) benötigt daher eine Querschlusserkennung. Bei der aus einer Betriebsanleitung mit der Nummer 19 238-01 der hiesigen Anmelderin für das Sicherheitsschaltgerät PNOZ® X2 bekannten Sicherheitsschaltvorrichtung ist diese dadurch realisiert, dass ein zweikanaliges Meldegerät, beispielsweise ein Not-Aus-Taster mit zwei redundanten Öffnerkontakten, mit getrennten Leitungen an die Anschlussklemmen angeschlossen wird, wobei ein erster Öffnerkontakt des Not-Aus-Tasters mit dem ersten Potential belegt ist, während der zweite Öffnerkontakt mit einem zweiten Potential belegt ist. Typischerweise wird als erstes Potential die Betriebsspannung von beispielsweise 24 V verwendet, während das zweite Potential ein Gegenpotential dazu ist, insbesondere Masse. Die Sicherheitsschaltvorrichtung ist intern so ausgebildet, dass ein Querschluss zwischen den Anschlussleitungen des Meldegerätes, beispielsweise aufgrund einer Kabelquetschung, zu einem elektrischen Kurzschluss in der Sicherheitsschaltvorrichtung führt, und der Kurzschluss einen starken Anstieg des in die Sicherheitsschaltvorrichtung fließenden Stroms zur Folge hat. Der erhöhte Strom löst eine Sicherung aus, die im Eingangskreis der Sicherheitsschaltvorrichtung angeordnet ist. Als Folge davon werden die Ausgangschaltelemente abgeschaltet. Diese bekannte Vorgehensweise besitzt allerdings den Nachteil, dass der Auslösepunkt der Sicherung (als einem Überstromerkennungselement) temperaturabhängig und damit ungenau ist.

Aus DE 44 23 704 C1 ist eine andere Vorgehensweise zur Erkennung von Querschlüssen bei Sicherheitsschaltvorrichtungen bekannt. In diesem Fall liegen die ausgangsseitigen Schaltelemente mit jeweils einem ihrer Anschlüsse an einem gemeinsamen Massepotential, während die jeweils anderen Anschlüsse auf unterschiedlichem positiven und negativem Potential liegen. Diese Vorgehensweise setzt allerdings voraus, dass die Sicherheitsschaltvorrichtung mit einer Wechselspannung versorgt wird, aus der das positive und negative Potential erzeugt werden. Daher ist diese bekannte Vorgehensweise nicht ohne weiteres auf Sicherheitsschaltvorrichtungen übertragbar, die mit einer Gleichspannung versorgt werden.

Aus DE 197 58 332 B4 ist eine andere Sicherheitsschaltvorrichtung bekannt, bei der im Eingangskreis ein Überstromerkennungselement in Form einer elektronischen Sicherung verwendet wird. Um ein automatisches Wiedereinschalten einer überwachten Maschine oder Anlage nach Beseitigung eines Querschlusses zu verhindern, ist hier ein Optokoppler parallel zu der Sicherung angeordnet. Wenn die Sicherung anspricht, schließt der Optokoppler den Eingangskreis der Sicherheitsschaltvorrichtung kurz und geht in Selbsthaltung. Diese bekannte Sicherheitsschaltvorrichtung besitzt jedoch den schon erwähnten Nachteil, dass der Auslösepunkt der Sicherung temperaturabhängig und damit ungenau ist.

Neben den bislang beschriebenen Verfahren mit statischen Potentialen auf den Meldeleitungen gibt es dynamische Verfahren, um Querschlüsse zu erkennen. Beispielhaft sei hier auf DE 100 33 073 A1, DE 197 02 009 C2 und DE 198 05 722 A1 verwiesen. Die dynamischen Verfahren verwenden unterschiedlich getaktete Signale auf den Verbindungsleitungen zu den Meldegeräten. Dadurch lassen sich die Signale auf den getrennten Meldeleitungen voneinander unterscheiden, und ein Querschluss kann erkannt werden. Die dynamischen Verfahren besitzen den Nachteil, dass zumindest zwei unterschiedliche Taktsignale bereitgestellt werden müssen, was mit Aufwand verbunden ist und die Geräte entsprechend teuer macht.

US 2001/0027352 A1 offenbart eine Sicherheitsschaltung eines Roboterkörpers, wobei jeder der n Schalter, jeweils einem Not-Aus-Faktor zugeordnet, einen ersten Öffner-Schließer-Kontakt und einen zweiten Öffner-Schließer-Kontakt, die beide simultan arbeiten, aufweist. Die ersten Öffner-Schließer-Kontakte sind elektrisch in Reihe durch eine erste Signalleitung verbunden zum Steuern des EIN- oder AUS-Schaltens einer Servo-Stromversorgung, während die zweiten Öffner-Schließer-Kontakte elektrisch in Reihe durch eine zweite Signalleitung verbunden sind zum Steuern des EIN- oder AUS-Schaltens der Servo-Stromversorgung.

Vor diesem Hintergrund ist es eine Aufgabe der vorliegenden Erfindung, eine einfache und kostengünstige Sicherheitsschaltvorrichtung anzugeben, mit der sich Fehler in der äußeren Beschaltung zuverlässig und möglichst frühzeitig erkennen lassen.

Gemäß einem Aspekt der Erfindung wird diese Aufgabe durch eine Sicherheitsschaltvorrichtung nach Anspruch 1 gelöst, wobei die Schaltungsanordnung dazu ausgebildet ist, zumindest eines der Schaltelemente zu öffnen, wenn das weitere Potential betragsmäßig kleiner ist als ein definierter Schwellenwert.

Die Sicherheitsschaltvorrichtung basiert auf dem statischen Ansatz und kommt daher ohne Taktsignale und Taktgeneratoren aus. Sie verwendet zwei voneinander verschiedene statische Potentiale auf den Verbindungsleitungen zu dem Meldegerät, um Querschlüsse zu erkennen, und zwar bevorzugt ohne ergänzende, beispielsweise aufmodulierte Takte. Dazu wird das (zwangsläufig ebenfalls statische) Potential an der zweiten und/oder vierten Anschlussklemme gemessen und mit dem dort erwarteten Potential verglichen. Dieser Vergleich ermöglicht eine zuverlässige Querschlusserkennung ohne dynamische Taktsignale. Daher lässt sich die Sicherheitsschaltvorrichtung ähnlich kostengünstig realisieren wie mit den bislang praktizierten statischen Verfahren. Bei der bevorzugten, geräteinternen Bereitstellung der Potentiale kann nicht nur auf Taktgeneratoren, sondern auch auf Anschlussklemmen zum Herausführen der Taktsignale verzichtet werden, was eine besonders kleinbauende Realisierung mit einer hohen Sicherheitskategorie ermöglicht.

Darüber hinaus kann die Sicherheitsschaltvorrichtung unabhängig von der Art der verwendeten Stromversorgung realisiert werden, d.h. sie ist sowohl mit einer Gleichspannungsversorgung als auch mit einer Wechselspannungsversorgung realisierbar. Dies ermöglicht erhöhte Stückzahlen und trägt weiter zu einer kostengünstigen Realisierung bei.

Erfindungsgemäß wird das weitere Potential mit Hilfe eines Schwellenwertvergleichs qualitativ bestimmt. In diesem Fall wird "nur" geprüft, ob das weitere Potential größer oder kleiner ist als ein definierter Schwellenwert. Diese Realisierung ist besonders kostengünstig und für die sicherheitstechnische Anwendung ausreichend, da es hier allein darauf ankommt zu erkennen, ob ein Querschluss vorliegt.

Ergänzend kann das weitere Potential an der zweiten und/oder vierten Anschlussklemme kann in Form eines Messwertes erfasst werden, der mit dem bekannten ersten und zweiten Potential quantitativ verglichen wird. In besonders bevorzugten Ausführungsbeispielen wird nicht auf etwaige Unterschiede der Potentiale an den Anschlussklemmen geguckt, sondern es wird überwacht, ob die Potentiale an diesen Klemmen den Verhältnissen entsprechen, die sich aus dem Schaltungsaufbau bei fehlerfreier Beschaltung ergeben. Gerade dies ermöglicht einen Verzicht auf die Erzeugung und Einprägung von unterscheidbaren, dynamischen Signalen.

Vorteilhafterweise kann mit der neuen Sicherheitsschaltvorrichtung auch erkannt werden, ob der ohmsche Leitungswiderstand der Anschlussleitungen in einem zulässigen Bereich liegt. Dies ist besonders vorteilhaft, wenn die neue Sicherheitsschaltvorrichtung ein (an sich schon bekanntes) Überstromerkennungselement im Eingangskreis verwendet, da in diesen Fällen bislang mit Hilfe einer Installationsvorschrift der zulässige Leitungswiderstand in den Anschlussleitungen zu den Meldegeräten begrenzt werden musste, um ein sicheres Ansprechen zu gewährleisten. Mit der vorliegenden Erfindung ist eine frühzeitige und automatische Abschaltung möglich, wenn der Leitungswiderstand einen unzulässig hohen Wert erreicht.

Schließlich besitzt die neue Sicherheitsschaltvorrichtung den Vorteil, dass die Querschlusserkennung - im Gegensatz zu den bisherigen statischen Verfahren - schon vor dem Schließen der Schaltelemente und damit vor dem Einschalten der Maschine oder Anlage möglich ist. Bei den bisherigen Sicherheitsschaltvorrichtungen mit statischer Querschlusserkennung konnte das Überstromerkennungselement bei einem Querschluss erst dann ansprechen, wenn die ausgangsseitigen Schaltelemente geschlossen waren.

Nicht jeder Querschluss in den Verbindungsleitungen zu den Meldeschaltern ist für den Betrieb der Sicherheitsschaltvorrichtung gleichermaßen gefährlich. Gefährlich sind vor allem Querschlüsse, die unmittelbar dazu führen, dass eine Betätigung der Meldeschalter nicht mehr erkannt werden kann und/oder die ausgangsseitigen Schaltelemente nicht mehr öffnen können. Mit der vorliegenden Erfindung wird auf sehr einfache und kostengünstige Weise erreicht, dass diese gefährlichen Querschlüsse sofort erkannt werden, da ein betragsmäßig niedriges Potential an der zweiten und/oder vierten Anschlussklemme die Folge eines solchen gefährlichen Querschlusses ist, wie weiter unten in den Ausführungsbeispielen dargestellt ist.

Insgesamt ermöglicht die neue Sicherheitsschaltvorrichtung eine frühzeitige und zuverlässige Erkennung von Querschlüssen mit statischen Signalen auf den Verbindungsleitungen zum Meldegerät. Die oben genannte Aufgabe ist damit vollständig gelöst.

In einer bevorzugten Ausgestaltung ist die Schaltungsanordnung dazu ausgebildet, das weitere Potential relativ zu dem ersten Potential zu überwachen.

Bevorzugt setzt die Schaltungsanordnung dieser Ausgestaltung das weitere Potential in ein Verhältnis zu dem ersten oder zweiten Potential und überwacht, ob das Verhältnis, beispielsweise in Form eines Quotienten, einen definierten Wertebereich einhält. Alternativ oder ergänzend hierzu könnte die Schaltungsanordnung das weitere Potential auch als absoluten Messwert mit einem Schwellenwert, dem ersten und/oder dem zweiten Potential vergleichen. In der bevorzugten Ausgestaltung ist die Schaltungsanordnung jedoch unabhängig von der absoluten Höhe des ersten und zweiten Potentials. Daher kann diese Ausgestaltung ohne Anpassungen mit unterschiedlichen Versorgungsspannungen betrieben werden.

In einer weiteren Ausgestaltung beinhaltet das zumindest eine weitere Potential ein drittes Potential an der zweiten Anschlussklemme und ein viertes Potential an der vierten Anschlussklemme.

Diese Ausgestaltung ermöglicht eine doppelte Kontrolle auf den "gefährlichsten" Querschluss, nämlich eine Verbindung zwischen der zweiten und vierten Anschlussklemme. Daher führt diese Ausgestaltung auf sehr kostengünstige Weise zu einer erhöhten Sicherheit.

In einer weiteren Ausgestaltung ist die Schaltungsanordnung dazu ausgebildet, das erste Potential zu bestimmen. In weiteren bevorzugten Ausgestaltungen kann die Schaltungsanordnung außerdem dazu ausgebildet sein, auch das zweite Potential zu bestimmen.

Im Regelfall sind das erste und das zweite Potential bei einer Sicherheitsschaltvorrichtung aufgrund der Versorgungsspannung bekannt. Eine messtechnische Bestimmung dieser Potentiale ermöglicht jedoch eine noch genauere Überwachung unter Berücksichtigung von Potentialschwankungen. Außerdem kann sich die Sicherheitsschaltvorrichtung in diese Ausgestaltung automatisch an unterschiedliche Versorgungsspannungen anpassen.

In einer weiteren Ausgestaltung ist die Schaltungsanordnung redundant ausgebildet.

Diese Ausgestaltung ermöglicht eine fehlersichere Überwachung der äußeren Beschaltung allein mit Hilfe der neuen Vorgehensweise.

In einer weiteren Ausgestaltung beinhaltet die Schaltungsanordnung zumindest einen integrierten Schaltkreis, insbesondere einen Mikrocontroller, der mit der zweiten und/oder vierten Anschlussklemme verbunden ist.

Die Verbindung des integrierten Schaltkreis mit der zweiten und/oder vierten Anschlussklemme kann zwischengeschaltete Bauelemente beinhalten, sofern der Schaltkreis in der Lage ist, das weitere Potential messtechnisch zu erfassen. Die Ausgestaltung ist von Vorteil, da die neue Sicherheitsschaltvorrichtung auf diese Weise mit wenigen Bauelementen sehr kostengünstig realisiert werden kann.

In einer weiteren Ausgestaltung beinhaltet die Schaltungsanordnung eine Umschalteinheit, die dazu ausgebildet ist, das zweite Schaltelement kurzzeitig parallel zu dem zweiten Meldeschalter zu schalten.

Mit anderen Worten ist die Umschalteinheit dieser Ausgestaltung dazu ausgebildet, das zweite Schaltelement über den Meldeschalter kurzzuschließen. Wenn kein Querschluss in der äußeren Beschaltung vorliegt, muss das zweite Schaltelement während dieser Umschaltzeit spannungsfrei sein, was sich mit Hilfe des weiteren Potentials einfach überprüfen lässt. Diese Ausgestaltung ist besonders vorteilhaft in Ergänzung zu einer direkten messtechnischen Bestimmung des weiteren Potentials, weil sich damit auf kostengünstige Weise eine diversitäre Redundanz realisieren lässt.

In einer weiteren Ausgestaltung beinhaltet die Umschalteinheit eine Diodenbrücke, in der das zweite Schaltelement angeordnet ist.

Diese Ausgestaltung ermöglicht eine sehr kostengünstige Realisierung in denjenigen Fällen, in denen das zweite Schaltelement mit gepolten Bauelementen, insbesondere mit Elektrolytkondensatoren, ergänzt wird, was bei Sicherheitsschaltvorrichtungen dieser Art häufig von Vorteil ist.

In einer weiteren Ausgestaltung beinhaltet die Schaltungsanordnung einen Schwellenwertsensor, insbesondere Optokoppler, der dazu ausgebildet ist, das weitere Potential zu bestimmen.

In dieser Ausgestaltung wird das weitere Potential nicht in Form eines Messwertes bestimmt, sondern es wird "lediglich" festgestellt, ob das weitere Potential einen Schwellenwert überschreitet oder unterschreitet. Da es für die Querschlusserkennung im Wesentlichen darauf ankommt festzustellen, ob ein Querschluss vorliegt oder nicht, ist eine derartige qualitative Auswertung ausreichend. Sie ist zudem sehr kostengünstig möglich und besonders vorteilhaft in Kombination mit einer Umschalteinheit, wie sie weiter oben beschrieben ist.

In einer weiteren Ausgestaltung beinhaltet die Sicherheitsschaltvorrichtung ein Überstromerkennungselement, insbesondere in Form eines PTC-Widerstandes, das dazu ausgebildet ist, zumindest eines der Schaltelemente bei einem Überstrom zu öffnen.

Diese Ausgestaltung kombiniert die neue Vorgehensweise mit dem bekannten statischen Verfahren zum Schutz vor Querschlüssen. Diese Kombination ist besonders vorteilhaft, weil die neue Potentialbestimmung auch eine Überprüfung der (an sich intakten) Verbindungsleitungen in Bezug auf deren Leitungswiderstand ermöglicht. Damit kann die bislang allein durch Montagevorschriften erreichte Sicherheit weiter erhöht werden. Andererseits ist die Verwendung eines Überstromerkennungselements in Form einer Sicherung, wie etwa einem PTC-Widerstand, eine sehr zuverlässige, kostengünstige und bewährte Methode, um die überwachte Maschine bei einem Querschluss schnell und sicher abzuschalten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer automatisiert arbeitenden Anlage, in der Ausführungsbeispiele der neuen Sicherheitsschaltvorrichtung zum Einsatz kommen,
- Fig. 2: eine vereinfachte Darstellung eines Ausführungsbeispiels der neuen Sicherheitsschaltvorrichtung in Form eines Ersatzschaltbildes, das den eingeschalteten Zustand zeigt,
- Fig. 3: ein Ersatzschaltbild der Sicherheitsschaltvorrichtung aus Fig. 2 mit möglichen Querschlüssen, und
- Fig. 4: das Ersatzschaltbild aus Fig. 3 mit einem weiteren möglichen Querschluss.

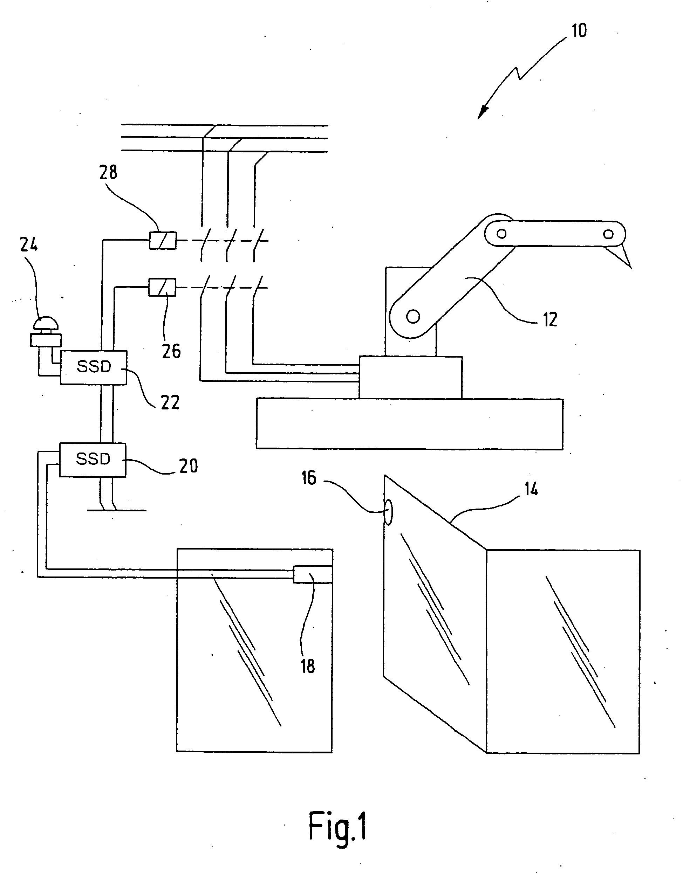

In Fig. 1 ist eine Anlage, in der Ausführungsbeispiele der Erfindung zum Einsatz kommen, in ihrer Gesamtheit mit der Bezugsziffer 10 bezeichnet.

Die Anlage 10 beinhaltet einen Roboter 12, dessen Arbeitsraum mit einer Schutztür 14 abgesichert ist. An der Schutztür 14 ist ein Betätiger 16 angeordnet, der mit einem Schutztürschalter 18 zusammenwirkt. Der Schutztürschalter 18 sitzt an einem Rahmen, an dem die bewegliche Schutztür 14 im geschlossenen Zustand anliegt. Der Betätiger 16 kann beispielsweise ein Transponder sein, der mit dem Schutztürschalter 18 nur im geschlossenen Zustand der Schutztür 14 kommunizieren kann.

Der Schutztürschalter 18 ist mit einem Sicherheitsschaltgerät 20 verbunden, das die Meldesignale des Schutztürschalters 18 verarbeitet. In Reihe zu dem Sicherheitsschaltgerät 20 befindet sich ein zweites Sicherheitsschaltgerät 22, an dem ein Not-Aus-Taster 24 als Meldegerät angeschlossen ist. Die Sicherheitsschaltgeräte 20, 22 sind kompakte Sicherheitsschaltvorrichtungen im Sinne der vorliegenden Erfindung, die einen herstellerseitig festgelegten Funktionsumfang haben.

Mit den Bezugsziffern 26, 28 sind zwei Schütze bezeichnet, deren Arbeitskontakte im Stromversorgungspfad zu dem Roboter 12 liegen. Die Schütze 26, 28 werden über die Sicherheitsschaltgeräte 20, 22 mit Strom versorgt, so dass jedes der Sicherheitsschaltgeräte 20, 22 in der Lage ist, den Roboter 12 über die Schütze 26, 28 abzuschalten. Eine Betriebssteuerung, die den normalen Betriebsablauf des Roboters 12 steuert, ist der Einfachheit halber nicht dargestellt.

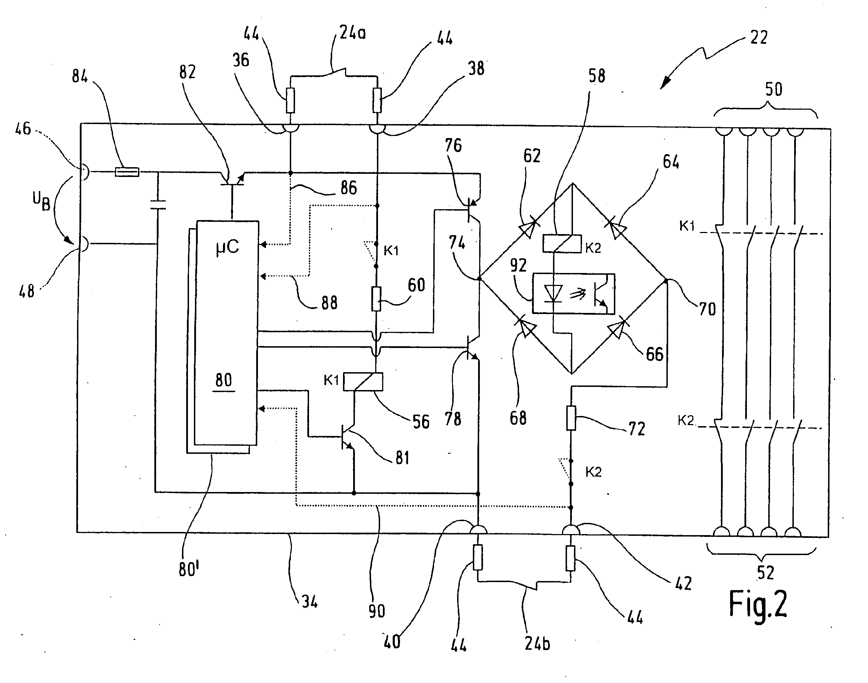

In Fig. 2 ist ein bevorzugtes Ausführungsbeispiel der Erfindung anhand des Sicherheitsschaltgerätes 22 dargestellt. Gleiche Bezugszeichen bezeichnen dieselben Elemente wie zuvor.

Das Sicherheitsschaltgerät 22 besitzt ein Gerätegehäuse 34, mit einer Vielzahl von Anschlussklemmen zum Anschließen des Not-Aus-Tasters 24, der Schütze 26, 28 und von möglichen weiteren Meldegeräten und Aktoren (hier nicht dargestellt). Mit den Bezugszeichen 36 und 38 sind eine erste und eine zweite Anschlussklemme bezeichnet, an die ein erster Öffnerkontakt 24a des Not-Aus-Tasters 24 angeschlossen ist. Mit den Bezugsziffern 40, 42 sind eine dritte und eine vierte Anschlussklemme bezeichnet, an die ein zweiter Öffnerkontakt 24b des Not-Aus-Tasters 24 angeschlossen ist. Mit der Bezugsziffer 44 ist der Leitungswiderstand R_{L} der Verbindungsleitungen bezeichnet, über die die Öffnerkontakte 24a, 24b mit den Anschlussklemmen 36 - 42 verbunden sind.

Zwei weitere Anschlussklemmen 46, 48 dienen dazu, das Sicherheitsschaltgerät 22 mit einer Betriebsspannung U_{B} von beispielsweise 24 V zu versorgen. Weitere Anschlussklemmen 50, 52 sind dazu vorgesehen, die Schütze 26, 28 und mögliche weitere Verbraucher anzuschließen.

In dem dargestellten Ausführungsbeispiel weist das Sicherheitsschaltgerät 22 potentialfreie Ausgänge in Form von Relaiskontakten K1, K2 auf, die zwischen den Anschlussklemmen 50, 52 in Reihe zueinander liegen. In einem solchen Fall wird an die Anschlussklemmen 50 ein positives Potential von beispielsweise 24 V angeschlossen, und die Schütze 26, 28 werden an die Anschlussklemmen 52 angeschlossen. Über die Relaiskontakte K1, K2 können die Schütze 26, 28 bestromt werden, oder der Stromfluss kann unterbrochen werden. Alternativ zu diesem bevorzugten Anwendungsfall kann die vorliegende Erfindung jedoch grundsätzlich auch bei Sicherheitsschaltvorrichtungen eingesetzt werden, die potentialbezogene Halbleiterausgänge aufweisen.

Die Erregerspulen der Relais K1, K2 sind in Fig. 2 mit den Bezugsziffern 56, 58 bezeichnet. Wie in Fig. 2 dargestellt ist, liegt die Erregerspule 56 des Relais K1 (nachfolgend Relais 56) mit einem Anschluss an Masse. Mit seinem anderen Anschluss ist das Relais 56 geräteintern mit der Anschlussklemme 38 verbunden. Der Vollständigkeit halber ist in dieser Verbindung noch ein Schließerkontakt des Relais 56 (für die Selbsthaltung) sowie ein Widerstand 60 dargestellt, der als Ersatzwiderstand für weitere, hier nicht dargestellte Bauelemente zu verstehen ist.

Die Anschlussklemme 36 ist geräteintern mit einem ersten statischen Potential, nämlich der Betriebsspannung U_{B}, verbunden. Dieses Potential ist über den Öffnerkontakt 24a des Not-Aus-Tasters 24 zu dem Relais 56 geführt.

Das Relais 58 liegt in einer Diodenbrücke bestehend aus vier Dioden 62, 64, 66, 68. Ein erster Anschluss 70 ist über einen Ersatzwiderstand 72 und einen Schließerkontakt des Relais 58 zu der Anschlussklemme 42 geführt. Die Anschlussklemme 40 ist mit dem Massepotential (zweites Potential im Sinne der Erfindung) verbunden.

Dementsprechend ist das Relais 58 über den zweiten Öffnerkontakt 24b des Not-Aus-Tasters 24 mit dem Massepotential verbunden.

Ein zweiter Anschluss 74 des Diodennetzwerks ist mit zwei Transistoren 76, 78 verbunden. Über den Transistor 76 kann der zweite Anschluss 74 des Diodennetzwerks mit dem ersten Potential (Betriebsspannung U_{B}) verbunden werden. Über den zweiten Transistor 78 kann der Anschluss 74 alternativ hierzu mit dem zweiten Potential (Masse) verbunden werden.

Mit der Bezugsziffer 80 ist ein Mikrocontroller bezeichnet, der unter anderem dazu ausgebildet ist, die Transistoren 76, 78 wechselseitig zueinander anzusteuern, um den Anschluss 74 entweder mit dem ersten Potential U_{B} oder dem zweiten Potential (Masse) zu verbinden. Darüber hinaus ist der Mikrocontroller 80 mit weiteren Transistoren 81 und 82 verbunden. Transistor 81 liegt seriell zu der Erregerspule des Relais K1. Transistor 82 liegt als Längstransistor in der Zuführung der Versorgungsspannung U_{B}. Mit Hilfe des Transistors 82 kann der Mikrocontroller 80 sämtliche zuvor genannten Bauelemente von der Versorgungsspannung U_{B} trennen, was unter anderem zur Folge hat, dass die Relaiskontakte K1, K2 abfallen. Alternativ oder ergänzend kann der Mikrocontroller 80 die Relais K1 und K2 auch über die Transistoren 76 und 81 abschalten.

Mit der Bezugsziffer 84 ist ein PTC-Widerstand bezeichnet, der als reversible Sicherung arbeitet.

Der Mikrocontroller 80 ist über Messleitungen 86, 88, 90 mit Knotenpunkten verbunden, an denen er das erste Potential sowie ein drittes und ein viertes Potential an den Anschlussklemmen 38 und 42 bestimmen kann. In einem bevorzugten Ausführungsbeispiel besitzt der Mikrocontroller 80 mehrere integrierte A/D-Wandler, mit deren Hilfe er die analogen Potentiale messtechnisch erfassen kann. Schließlich ist in Fig. 2 noch ein Optokoppler 92 dargestellt, dessen eingangsseitiges Leuchtelement seriell zu dem Relais 58 in dem Diodennetzwerk liegt. Der Optokoppler 92 erzeugt ein Ausgangssignal, wenn das Relais 58 von Strom durchflossen ist, und dieses Ausgangssignal ist ebenfalls dem Mikrocontroller 80 zugeführt (hier aus Gründen der Übersichtlichkeit nicht dargestellt).

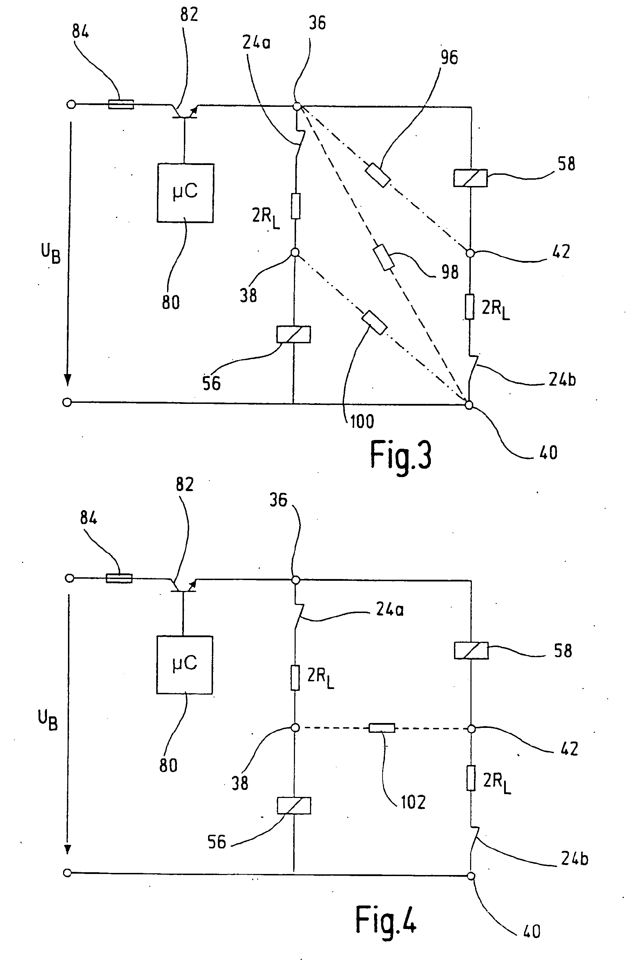

Die Funktionsweise des Sicherheitsschaltgerätes 22 ist wie folgt: Im eingeschalteten und betriebsbereiten Zustand fließt ein Strom über den Öffnerkontakt 24a zu dem Relais 56. Außerdem fließt ein Strom über den Transistor 76 und das Diodennetzwerk 62 - 68 zu dem Relais 58. Beide Relais 56, 58 sind angezogen, d.h. die entsprechenden Schließerkontakte K1, K2 sind geschlossen (hier am Ausgang nicht dargestellt). Die Relais 56, 58 befinden sich in Selbsthaltung, wie dies den einschlägigen Fachleuten hinreichend bekannt ist. Ein noch weiter vereinfachtes Ersatzschaltbild für diesen Betriebszustand ist in den Figuren 3 und 4 dargestellt. Gleiche Bezugszeichen bezeichnen dabei die selben Elemente wie zuvor. Der Übersichtlichkeit halber sind die Leitungswiderstände 44 in jeweils einem Ersatzwiderstand 2R_{L} dargestellt.

Fig. 3 zeigt drei mögliche Querschlüsse 96, 98, 100 zwischen den Anschlussklemmen 36 - 42. Ein weiterer Querschluss 102 ist in Fig. 4 dargestellt. Von diesen Querschlüssen ist der Querschluss 102 in Fig. 4 am gefährlichsten, da er zur Folge haben kann, dass ein Strom über die Relais 56, 58 fließt, auch wenn die Öffnerkontakte 24a, 24b beide geöffnet sind. Das Sicherheitsschaltgerät 22 würde daher trotz geöffneter Meldeschalter nicht reagieren können. Der Roboter 12 würde weiterarbeiten, obwohl der Not-Aus-Taster 24 betätigt wurde. Demgegenüber wird bei den Querschlüssen 96, 98, 100 in Fig. 3 stets zumindest eines der Relais 56, 58 stromlos, wenn die Öffnerkontakte 24a, 24b des Not-Aus-Tasters 24 geöffnet werden. Im Fall des Querschlusses 98 wird zudem die Sicherung 84 sofort ansprechen, da die Betriebsspannung U_{B} unmittelbar kurzgeschlossen wird.

Der "gefährliche" Querschluss 102 wird gemäß Fig. 4 erkannt, indem man das Potential an den Anschlussklemmen 38 und/oder 42 bestimmt und mit dem gemessenen oder bekannten Potential an der Anschlussklemme 36 vergleicht. Im Fall des Querschlusses 102 ist das Potential an der Anschlussklemme 38 aufgrund des Querpfades über den Öffnerkontakt 24b deutlich niedriger als ohne Querschluss 102. Diese Potentialdifferenz kann mit Hilfe des Mikrocontrollers 80 einfach erkannt werden. Vorzugsweise bildet und überwacht der Mikrocontroller 80 einen Quotienten aus dem dritten Potential an der Anschlussklemme 38 und dem ersten Potential an der Anschlussklemme 36. In einem Ausführungsbeispiel überprüft der Mikrocontroller 80, ob dieser Quotient größer als 0,75 (75%) ist. Ist dies der Fall, kann man davon ausgehen, dass kein Querschluss 102 vorliegt. Außerdem ist das Potential an der Anschlussklemme 42 im Fall des Querschlusses 102 etwa gleich dem Potential an der Anschlussklemme 38, was der Mikrocontroller 80 ebenfalls überwacht.

In ähnlicher Weise kann durch einen Plausibilitätsvergleich der Potentiale an den Anschlussklemmen 36, 38 und 42 ein Querschluss 96 oder 100 (Fig. 3), ein Erdschluss oder ein Kurzschluss zur Betriebsspannung U_{B} erkannt werden. Sobald einer dieser Fälle auftritt, schaltet der Mikrocontroller 80 die Relais 56, 58 über die Transistoren 76, 81 und/oder über den Transistor 82 ab. In anderen Ausführungsbeispielen kann der Transistor 82 entfallen.

Die Überwachung der äußeren Beschaltung des Sicherheitsschaltgerätes 22 auf Querschlüsse kann zweikanalig nach dem beschriebenen Verfahren erfolgen. Dies ist in Fig. 2 anhand eines redundanten Mikrocontrollers 80' dargestellt. Bevorzugt ist es jedoch, das Relais 58 mit Hilfe der Transistoren 76, 78 kurzzeitig parallel zu dem Öffnerkontakt 24b zu schalten, indem der Transistor 76 geöffnet und der Transistor 78 geschlossen wird. Ohne Querschluss dürfte in diesem Fall kein Strom mehr über das Relais 58 fließen, da an beiden Anschlüssen 70, 74 des Diodennetzwerkes 62 - 68 dasselbe Potential anliegt, nämlich Masse. Sollte jedoch an einem der Anschlüsse 40, 42 aufgrund eines Querschlusses ein anderes Potential anliegen, käme es zu einem Stromfluss, der mit Hilfe des Optokopplers 92 erkannt und an den Mikrocontroller 80 gemeldet wird. Auch in diesem Fall schaltet der Mikrocontroller 80 die Relais 56, 58 mit Hilfe des Transistors 82 ab. Ebenso ist es möglich, die Potentiale an den Anschlussklemmen 36, 38 mit Hilfe eines Diodennetzwerkes (hier nicht dargestellt) an dem Relais 56 zu vergleichen.

## Patentansprüche

1. Sicherheitsschaltvorrichtung zum fehlersicheren Abschalten eines elektrischen Verbrauchers (26, 28), insbesondere in einer automatisiert betriebenen Anlage (10), mit einer ersten und einer zweiten Anschlussklemme (36, 38) zum Anschließen eines ersten Meldeschalters (24a), mit einer dritten und einer vierten Anschlussklemme (40, 42) zum Anschließen eines zweiten Meldeschalters (24b), und mit zumindest einem ersten und einem zweiten Schaltelement (56, 58), die dazu ausgebildet sind, ein redundantes Ausgangsschaltsignal zum Abschalten des Verbrauchers (26, 28) zu erzeugen, wobei die erste Anschlussklemme (36) mit einem betragsmäßig hohen ersten statischen Potential (U_{B}) belegt ist, und wobei die dritte Anschlussklemme (40) mit einem unterschiedlichen, betragsmäßig niedrigen zweiten statischen Potential belegt ist, wobei die zweite Anschlussklemme (38) mit dem ersten Schaltelement (56) derart gekoppelt ist, dass das erste Schaltelement (56) über den ersten Meldeschalter (24a) mit dem ersten statischen Potential (U_{B}) verbindbar ist, und wobei die vierte Anschlussklemme (42) mit dem zweiten Schaltelement (58) derart gekoppelt ist, dass das zweite Schaltelement (58) über den zweiten Meldeschalter (24b) mit dem zweiten statischen Potential verbindbar ist, mit einer Schaltungsanordnung (80, 86, 88, 90; 80, 92) zum Bestimmen von zumindest einem weiteren Potential an der zweiten und/oder vierten Anschlussklemme (38, 42), wobei die Schaltungsanordnung (80, 86, 88, 90; 80, 92) ferner dazu ausgebildet ist, das redundante Ausgangsschaltsignal in Abhängigkeit von dem weiteren Potential zu steuern, **dadurch gekennzeichnet, dass** die Schaltungsanordnung (80, 86, 88, 90) dazu ausgebildet ist, zumindest eines der Schaltelemente (56, 58) zu öffnen, wenn das weitere Potential betragsmäßig kleiner ist als ein definierter Schwellenwert.

2. Sicherheitsschaltvorrichtung nach Anspruch 1, **dadurch gekennzeichnet, dass** die Schaltungsanordnung (80, 86, 88, 90) dazu ausgebildet ist, das weitere Potential relativ zu dem ersten Potential (U_{B}) zu überwachen.

3. Sicherheitsschaltvorrichtung nach einem der Ansprüche 1 bis 2, **dadurch gekennzeichnet, dass** das zumindest eine weitere Potential ein drittes Potential an der zweiten Anschlussklemme (38) und ein viertes Potential an der vierten Anschlussklemme (42) beinhaltet.

4. Sicherheitsschaltvorrichtung nach einem der Ansprüche 1 bis 3, **dadurch gekennzeichnet, dass** die Schaltungsanordnung (80, 86, 88, 90) ferner dazu ausgebildet ist, das erste Potential (U_{B}) zu bestimmen.

5. Sicherheitsschaltvorrichtung nach einem der Ansprüche 1 bis 4, **dadurch gekennzeichnet, dass** die Schaltungsanordnung (80, 80') redundant ausgebildet ist.

6. Sicherheitsschaltvorrichtung nach einem der Ansprüche 1 bis 5, **dadurch gekennzeichnet, dass** die Schaltungsanordnung (80, 86, 88, 90; 80 92) zumindest einen integrierten Schaltkreis, insbesondere einen Mikrocontroller (80), beinhaltet, der mit der zweiten und/oder vierten Anschlussklemme (38, 42) verbunden ist.

7. Sicherheitsschaltvorrichtung nach einem der Ansprüche 1 bis 6, **dadurch gekennzeichnet, dass** die Schaltungsanordnung (80, 92) eine Umschalteinheit (62, 64, 66, 68; 76, 78) beinhaltet, die dazu ausgebildet ist, das zweite Schaltelement (58) kurzzeitig parallel zu dem zweiten Meldeschalter (24b) zu schalten.

8. Sicherheitsschaltvorrichtung nach Anspruch 7, **dadurch gekennzeichnet, dass** die Umschalteinheit (62, 64, 66, 68; 76, 78) eine Diodenbrücke (62 - 68) beinhaltet, in der das zweite Schaltelement (58) angeordnet ist

9. Sicherheitsschaltvorrichtung nach einem der Ansprüche 1 bis 8, **dadurch gekennzeichnet, dass** die Schaltungsanordnung (80, 92) einen Schwellenwertsensor (92), insbesondere einen Optokoppler beinhaltet, der dazu ausgebildet ist, das weitere Potential zu bestimmen.

10. Sicherheitsschaltvorrichtung nach einem der Ansprüche 1 bis 9, **gekennzeichnet durch** ein Überstromerkennungselement (84), insbesondere einen PTC-Widerstand, das dazu ausgebildet ist, zumindest eines der Schaltelemente (56, 58) bei einem Überstrom zu öffnen.

## Claims

1. A safety switching apparatus for failsafe disconnection of an electrical load (26, 28), in particular in an automatically operated installation (10), comprising a first and a second connecting terminal (36, 38) for connection of a first signaling switch (24a), comprising a third and a fourth connecting terminal (40, 42) for connection of a second signaling switch (24b), and comprising at least one first and one second switching element (56, 58) configured to produce a redundant output switching signal for disconnection of the load (26, 28), wherein the first connecting terminal (36) is connected to a high magnitude first steady-state potential (U_{B}), and wherein the third connecting terminal (40) is connected to a different, low magnitude second steady-state potential, wherein the second connecting terminal (38) is coupled to the first switching element (56) such that the first switching element (56) can be connected via the first signaling switch (24a) to the first steady-state potential (U_{B}), and wherein the fourth connecting terminal (42) is coupled to the second switching element (58) such that the second switching element (58) can be connected via the second signaling switch (24b) to the second steady-state potential, with a circuit arrangement (80, 86, 88, 90; 80, 92) for determining at least one further potential at the second and/or fourth connecting terminal (38, 42), with the circuit arrangement (80, 86, 88, 90; 80, 92) also being designed to control the redundant output switching signal as a function of the further potential, **characterized by** the circuit arrangement (80, 86, 88, 90) being designed to open at least one of the switching elements (56, 58) when the magnitude of the further potential is less than a defined threshold value.

2. The safety switching apparatus of claim 1, **characterized in that** the circuit arrangement (80, 86, 88, 90) is designed to monitor the further potential relative to the first potential (U_{B}).

3. The safety switching apparatus of one of claims 1 to 2, **characterized in that** the at least one further potential includes a third potential at the second connecting terminal (38) and a fourth potential at the fourth connecting terminal (42).

4. The safety switching apparatus of one of claims 1 to 3, **characterized in that** the circuit arrangement (80, 86, 88, 90) is also designed to determine the first potential (U_{B}).

5. The safety switching apparatus of one of claims 1 to 4, **characterized in that** the circuit arrangement (80, 80') is of a redundant design.

6. The safety switching apparatus of one of claims 1 to 5, **characterized in that** the circuit arrangement (80, 86, 88, 90; 80, 92) includes at least one integrated circuit, in particular a microcontroller (80), which is coupled to the second and/or fourth connecting terminal (38, 42).

7. The safety switching apparatus of one of claims 1 to 6, **characterized in that** the circuit arrangement (80, 92) includes a switching unit (62, 64, 66, 68; 76, 78) designed to briefly connect the second switching element (58) in parallel with the second signaling switch (24b).

8. The safety switching apparatus of claim 7, **characterized in that** the switching unit (62, 64, 66, 68; 76, 78) includes a diode bridge (62 - 68) in which the second switching element (58) is arranged.

9. The safety switching apparatus of one of claims 1 to 8, **characterized in that** the circuit arrangement (80, 92) includes a threshold value sensor (92), in particular an optocoupler, which is designed to determine the further potential.

10. The safety switching apparatus of one of claims 1 to 9, **characterized by** an overcurrent identification element (84), in particular a PTC thermistor, which is designed to open at least one of the switching elements (56, 58) in the event of an overcurrent.

## Revendications

1. Dispositif de commutation de sécurité pour la mise hors circuit sans erreur d'un appareillage électrique (26, 28), notamment dans un équipement (10) qui fonctionne automatiquement, comprenant une première et une deuxième borne de raccordement (36, 38) pour raccorder un premier commutateur de signalisation (24a), comprenant une troisième et une quatrième borne de raccordement (40, 42) pour raccorder un deuxième commutateur de signalisation (24b), et comprenant au moins un premier et un deuxième élément de commutation (56, 58), lesquels sont conçus pour générer un signal de commutation de sortie redondant pour la mise hors circuit de l'appareillage (26, 28), la première borne de raccordement (36) étant soumise à un premier potentiel statique (U_{B}) de valeur élevée et la troisième borne de raccordement (40) étant soumise à un deuxième potentiel statique différent, de valeur plus faible, la deuxième borne de raccordement (38) étant connectée au premier élément de commutation (56) de telle sorte que le premier élément de commutation (56) peut être relié au premier potentiel statique (U_{B}) par le biais du premier commutateur de signalisation (24a), et la quatrième borne de signalisation (42) étant connectée au deuxième élément de commutation (58) de telle sorte que le deuxième élément de commutation (58) peut être relié au deuxième potentiel statique par le biais du deuxième commutateur de signalisation (24b), comprenant un arrangement de commutation (80, 86, 88, 90 ; 80, 92) pour définir au moins un potentiel supplémentaire sur la deuxième et/ou la quatrième borne de raccordement (38, 42), l'arrangement de commutation (80, 86, 88, 90 ; 80, 92) étant en outre configuré pour commander le signal de commutation de sortie redondant en fonction du potentiel supplémentaire, **caractérisé en ce que** l'arrangement de commutation (80, 86, 88, 90) est configuré pour ouvrir au moins l'un des éléments de commutation (56, 58) lorsque le potentiel supplémentaire présente une valeur inférieure à une valeur de seuil définie.

2. Dispositif de commutation de sécurité selon la revendication 1, **caractérisé en ce que** l'arrangement de commutation (80, 86, 88, 90) est configuré pour surveiller le potentiel supplémentaire par rapport au premier potentiel (U_{B}).

3. Dispositif de commutation de sécurité selon l'une des revendications 1 à 2, **caractérisé en ce qu'**au moins un potentiel supplémentaire contient un troisième potentiel sur la deuxième borne de raccordement (38) et un quatrième potentiel sur la quatrième borne de raccordement (42).

4. Dispositif de commutation de sécurité selon l'une des revendications 1 à 3, **caractérisé en ce que** l'arrangement de commutation (80, 86, 88, 90) est en outre configuré pour définir le premier potentiel (U_{B}).

5. Dispositif de commutation de sécurité selon l'une des revendications 1 à 4, **caractérisé en ce que** l'arrangement de commutation (80, 80') est réalisé redondant.

6. Dispositif de commutation de sécurité selon l'une des revendications 1 à 5, **caractérisé en ce que** l'arrangement de commutation (80, 86, 88, 90 ; 80, 92) contient au moins un circuit intégré, notamment un microcontrôleur (80), qui est relié avec la deuxième et/ou la quatrième borne de commutation (38, 42).

7. Dispositif de commutation de sécurité selon l'une des revendications 1 à 6, **caractérisé en ce que** l'arrangement de commutation (80, 92) contient une unité d'inversion (62, 64, 66, 68 ; 76, 78) qui est configurée pour brancher le deuxième élément de commutation (58) pendant un court instant en parallèle avec le deuxième commutateur de signalisation (24b).

8. Dispositif de commutation de sécurité selon la revendication 7, **caractérisé en ce que** l'unité d'inversion (62, 64, 66, 68 ; 76, 78) contient un pont à diodes (62 - 68) dans lequel est disposé le deuxième élément de commutation (58).

9. Dispositif de commutation de sécurité selon l'une des revendications 1 à 8, **caractérisé en ce que** l'arrangement de commutation (80, 92) contient un détecteur de valeur de seuil (92), notamment un optocoupleur qui est configuré pour définir le potentiel supplémentaire.

10. Dispositif de commutation de sécurité selon l'une des revendications 1 à 9, **caractérisé par** un dispositif de détection de surintensité (84), notamment une résistance CTP, qui est configuré pour ouvrir au moins l'un des éléments de commutation (56, 58) en présence d'une surintensité.
